# EUROPÄISCHE PATENTSCHRIFT

(11) **EP 1 802 506 B1**
(45) Veröffentlichungstag und Bekanntmachung des Hinweises auf die Patenterteilung: **15.12.2010**
(21) Anmeldenummer: 05796959.4
(22) Anmeldetag: 07.10.2005
(51) Int. Cl.: B60T 13/575

(54) **PNEUMATISCHER BREMSKRAFTVERSTÄRKER**
PNEUMATIC BRAKE BOOSTER
SERVOFREIN PNEUMATIQUE

(30) Priorität: 15.10.2004 DE 102004050582; 04.10.2005 DE 102005047529
(43) Veröffentlichungstag der Anmeldung: 04.07.2007
(73) Patentinhaber: Continental Teves AG & Co. oHG, 60488 Frankfurt am Main (DE)
(72) Erfinder: KRÄMER, Horst, 65462 Ginsheim-Gustavsburg (DE); SELLINGER, Thomas, 63073 Offenbach (DE)
(86) Internationale Anmeldenummer: PCT/EP2005/055084
(87) Internationale Veröffentlichungsnummer: WO 2006/042794

(56) Entgegenhaltungen:
- DE-A1- 3 904 641
- US-A- 4 494 443
- US-A- 4 892 027

## Beschreibung

Die Erfindung betrifft einen pneumatischen Bremskraftverstärker gemäß dem Oberbegriff des Patentanspruchs 1.

Ein derartiger pneumatischer Bremskraftverstärker ist beispielsweise aus der US 4,494,443 bekannt. Das darin beschriebene Aufnahmeelement ist als Hülse ausgebildet, die zur axialen Sicherung im Steuergehäuse von einem elastischen Element ummantelt ist.

Aus der DE 39 04 641 A1 ist zur Aufnahme des Reaktionselementes sowie des Ausgangsgliedes ein topfförmiges Aufnahmeelement bekannt, welches sich mit einem Boden an einer Stirnseite des Steuergehäuses axial abstützt. Das Reaktionselement liegt dabei in axialer Richtung teilweise an dem Aufnahmeelement, teilweise an dem Steuergehäuse sowie teilweise an einem Eingangsglied an. Als nachteilig bei derartigen Aufnahmeelementen von Reaktionselement und Ausgangsglied hat sich die topfförmige Ausgestaltung des Aufnahmeelementes hinsichtlich der SpaltSituation zwischen Aufnahmeelement und Steuergehäuse sowie Aufnahmeelement und Ausgangsglied erwiesen, da das topfförmige Aufnahmeelement zwei Durchmesser aufweist, welche maßlich auf das Steuergehäuse sowie das Reaktionselement und das Ausgangsglied abgestimmt werden müssen. Um dieser Tatsache Rechnung zu tragen, ist eine präzise und damit kostenintensive Herstellung des Aufnahmeelementes notwendig oder es müssen relativ große Spalte in Kauf genommen werden, welche sich jedoch negativ auf den Leerweg des Bremskraftverstärkers sowie auf eine Spaltextrusion des Reaktionselementes auswirken. Ferner wird die aufwendige Montage des Halteelementes, welches zusätzlich der Führung des Ausgangsgliedes dient, als verbesserungswürdig angesehen.

Daher ist es Aufgabe der Erfindung, einen gattungsgemäßen Bremskraftverstärker bereitzustellen, welcher sich durch eine kostengünstige Ausgestaltung, eine einfache Montage sowie gleichzeitig eine geringe Spaltextrusion des Reaktionselementes und einen geringen Leerweg auszeichnet.

Die Aufgabe wird erfindungsgemäß durch den Patentanspruch 1 gelöst.

In vorteilhafter Ausgestaltung der Erfindung weist die Hülse an ihren Enden Mittel zur Montageerleichterung auf. Die Hülse kann dadurch leicht in das Steuergehäuse montiert werden. Ferner wird die Montage von Reaktionselement und Ausgangsglied erleichtert. Beispielsweise kann hierzu die Hülse auf einer Innenseite an ihren Enden gefast ausgebildet sein oder weist an ihren beiden Enden einen nach radial außen ausgebildeten Kragen auf oder weist an einem ersten, dem Steuergehäuse abgewandten Ende einen nach radial außen ausgebildeten Kragen auf und ist an einem zweiten, dem Steuergehäuse zugewandten Ende auf der Innenseite gefast ausgebildet.

Eine weitere Montagevereinfachung wird dadurch erzielt, dass das Haltelement durch eine Rückstellfeder des Bremskraftverstärkers vorgespannt vorgesehen ist, wodurch ein zusätzliche Verbindung zwischen Haltelement und beispielsweise Steuergehäuse nicht notwendig ist.

Das Haltelement ist im Wesentlichen topfförmig ausgebildet, wobei das Ausgangsglied einen Topfboden des Haltelementes mittig durchragt und das Halteelement auf einer Innenseite einen von dem Topfboden hervorstehenden, zylindrischen Fortsatz zur Führung des Ausgangsgliedes aufweist, und die Rückstellfeder liegt zumindest teilweise an einem Topfrand an. Dabei weist das Halteelement in vorteilhafter Ausgestaltung im Bereich des Topfbodens radiale Arme zum Halten der Hülse in axialer Richtung auf.

Eine gewichts- und werkstoffoptimierte Ausgestaltung des Haltelementes wird erzielt, indem das Haltelement im Wesentlichen topfförmig aus vier Stegen ausgebildet ist, welche an dem Topfboden zusammenlaufen und an dem Topfrand mittels eines umlaufenden Randes miteinander verbunden sind, wobei die radialen Arme jeweils zwischen zwei Stegen angeordnet vorgesehen sind. Dabei kann vorteilhafterweise zwischen zwei Stegen eine Versteifungswand vorgesehen sein.

Nachstehend wird die Erfindung anhand der Zeichnung erläutert, welche Ausführungsbeispiele zeigt. Es zeigt jeweils stark schematisiert sowie im Schnitt:
- Figur 1: eine Teilansicht eines ersten Ausführungsbeispieles eines erfindungsgemäßen Bremskraftverstärkers im Längsschnitt;
- Figur 2: einen Ausschnitt eines zweiten Ausführungsbeispiels eines erfindungsgemäßen Bremskraftverstärkers im Längsschnitt;
- Figur 3: einen Ausschnitt eines dritten Ausführungsbeispiels eines erfindungsgemäßen Bremskraftverstärkers im Längsschnitt;
- Figur 4: eine perspektivische Ansicht eines Halteelementes des ersten Ausführungsbeispieles mit Versteifungswänden und
- Figur 5: eine perspektivische Ansicht eines Halteelementes ohne Versteifungswände.

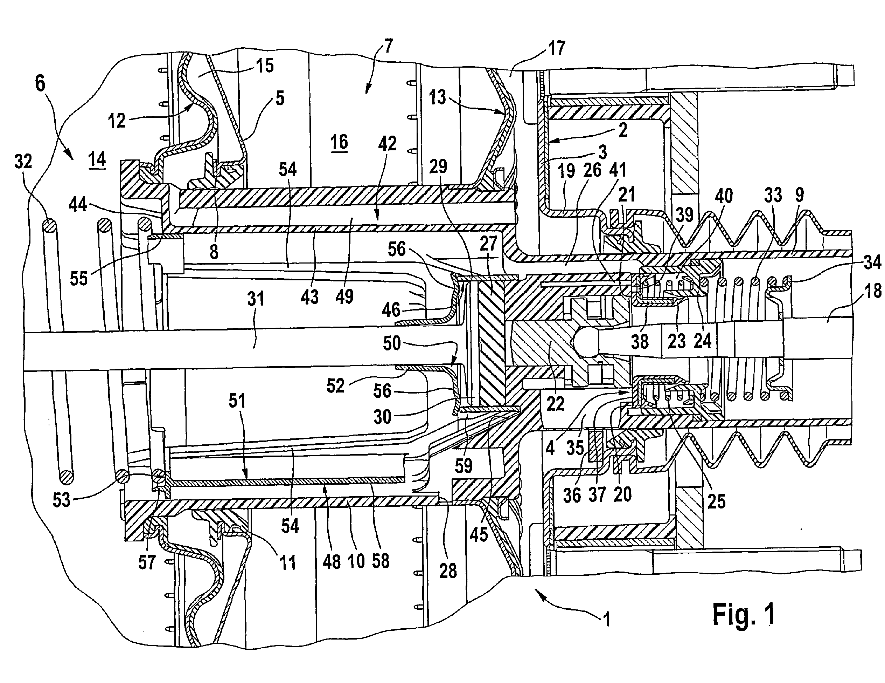

Fig. 1 zeigt ein Ausführungsbeispiel eines erfindungsgemäßen pneumatischen Bremskraftverstärkers 1 in Tandembauweise im Längsschnitt, welcher ein Verstärkergehäuse 2 umfasst, das eine erste Gehäusehalbschale 3 und eine nicht dargestellte zweite Gehäusehalbschale aufweist, die vorzugsweise mit Hilfe von umformtechnischen Maßnahmen miteinander verpresst sind. Der Innenraum des Verstärkergehäuses 2 wird mit Hilfe einer in etwa mittig angeordneten, ortsfesten Trennwand 5 in einen ersten, vorderen, hauptzylinderseitigen Verstärkerraum 6 sowie einen zweiten, hinteren, bremspedalseitigen Verstärkerraum 7 aufgeteilt, wobei die Trennwand 5 eine mittig angeordnete, kreisförmige Ausnehmung 8 aufweist, welche von einem Steuergehäuse 9 bzw. dessen zylindrischen Verlängerung 10 durchgriffen ist. Die Trennwand 5 liegt mittels eines Dichtelementes 11 dichtend an der Verlängerung 10 an.

Der erste, vordere Verstärkerraum 6 wird durch eine erste bewegliche Wand 12 in eine erste Unterdruckkammer 14 konstanten Druckes und in eine erste Arbeitskammer 15 veränderlichen Druckes und der zweite, hintere Verstärkerraum 7 durch eine zweite bewegliche Wand 13 in eine zweite Unterdruckkammer 16 und eine zweite Arbeitskammer 17 unterteilt. Üblicherweise ist die zweite, nicht dargestellte Gehäusehalbschale mit einem Unterdruckanschluss versehen, mittels dessen die erste Unterdruckkammer 14 an eine geeignete Unterdruckquelle, beispielsweise einen Ansaugkrümmer des Kraftfahrzeugmotors, oder an eine Vakuumpumpe angeschlossen werden kann.

Die erste Gehäusehalbschale 3 ist mit einem axialen Abschnitt 19 kleineren Durchmessers versehen, in dem das Steuergehäuse 9 abgedichtet axial bewegbar geführt ist. In dem Inneren des Steuergehäuses 9 ist ein Steuerventil 4 vorgesehen, das eine kontrollierte Belüftung der beiden Arbeitskammern 15,17 ermöglicht und dadurch die Druckdifferenz zwischen den Unterdruckkammern 14,16 und den Arbeitskammern 15,17 steuert.

Das Steuerventil 4 ist durch ein Eingangsglied 18 betätigbar, das mit einem nicht dargestellten Bremspedal verbunden ist, und besteht aus einem am Steuergehäuse 9 ausgebildeten ersten Dichtsitz 20, einem, an einem mit dem Eingangsglied 18 verbundenen Ventilkolben 22 ausgebildeten zweiten Dichtsitz 21 sowie einem, mit beiden Dichtsitzen 20,21 zusammenwirkenden Ventilkörper 23, der mittels einer, sich an einem Führungselement 24 abstützenden Ventilfeder 25 gegen die Ventilsitze 20,21 gedrückt wird. Die zweite Arbeitskammer 17 ist mit der ersten Unterdruckkammer 14 über zwei seitlich im Steuergehäuse 9 verlaufende Entlüftungskanäle 26 verbindbar.

Die Bremskraft wird über ein stirnseitig am Steuergehäuse 9 anliegendes gummielastisches Reaktionselement 27 sowie ein, einen Kopfflansch 30 aufweisendes Ausgangsglied 31 auf einen Betätigungskolben eines nicht dargestellten Hauptzylinders der Kraftfahrzeugbremsanlage übertragen, der am unterdruckseitigen Ende des Bremskraftverstärkers 1 angebracht ist. Die an dem Eingangsglied 18 eingeleitete Eingangskraft wird auf das Reaktionselement 27 mittels des Ventilkolbens 22 übertragen.

Eine Rückstellfeder 32, die sich an der unterdruckseitigen Stirnwand des Verstärkergehäuses 2 abstützt, hält die beweglichen Wände 12,13 in der gezeigten Ausgangsstellung. Außerdem ist eine Rückholfeder 33 vorgesehen, die zwischen einem, an dem Eingangsglied 18 angeordneten Halteelement 34 und dem Führungselement 24 des Steuerventils 4 angeordnet ist und deren Kraft für eine Vorspannung des Ventilkolbens 22 bzw. seines Ventilsitzes 21 gegenüber dem Ventilkörper 23 sorgt.

Um die zweite Arbeitskammer 17 bei der Betätigung des Steuerventils 20 mit der Atmosphäre verbinden zu können, sind schließlich im Steuergehäuse 9 zwei Belüftungskanäle 35 ausgebildet, die sich in axialer Richtung annähernd über die Länge der Entlüftungskanäle 26 erstrecken. Damit kann der Strömungsquerschnitt der Belüftungskanäle 35 erheblich vergrößert werden und gleichzeitig wird die Luftströmung verbessert, da der axiale Abstand zwischen den Belüftungskanälen 35 und dem strömungskritischen Bereich der Dichtsitze 20,21 des Steuerventils 4 optimal verkürzt wird. Dadurch wird die Ansprechdynamik des Bremskraftverstärkers 1 optimiert.

Die Rückkehrbewegung des Ventilkolbens 22 am Ende eines Bremsvorganges wird dabei durch ein Querglied 36 begrenzt, welches in radialer Richtung in das Steuergehäuse 9 einführbar ist und das in der in der Zeichnung gezeigten Lösestellung des Bremskraftverstärkers an dem Verstärkergehäuse 2 anliegt.

Der Ventilkörper 23 weist eine mit den beiden Dichtsitzen 20,21 zusammenwirkende ringförmige Dichtfläche 37 auf, die mittels eines metallischen, L-förmigen Versteifungselementes 38 versteift ist und mit mehreren axialen Durchlässen 39 versehen ist.

Im Steuergehäuse 9 ist ein pneumatischer Raum 40 begrenzt. Die durch die Durchlässe 39 gebildeten, näher nicht bezeichneten Strömungskanäle verbinden den pneumatischen Raum 40 mit einem durch die Dichtsitze 20,21 begrenzten Ringraum 41, in dem die oben erwähnten Belüftungskanäle 35 münden, so dass der, auf der der Dichtfläche 37 abgewandten Seite des Ventilkörpers 23 ausgebildete pneumatische Raum 40 ständig mit der zweiten Arbeitskammer 17 in Verbindung steht und am Ventilkörper 23 ein Druckausgleich stattfindet.

Die Verbindung zwischen der ersten und der zweiten Unterdruckkammer 14,16 erfolgt durch einen oder mehrere Durchbrüche 28 in der Verlängerung 10 des Steuergehäuses 9, die im Bereich zwischen der Trennwand 5 und der zweiten beweglichen Wand 13 vorgesehen sind.

Ferner sind ein oder mehrere im wesentlich axial ausgerichtete Verbindungskanäle 42 in der Verlängerung 10 des Steuergehäuses 9 vorgesehen, welche die erste und die zweite Unterdruckkammer 14,16 miteinander verbinden. Vorzugsweise sind zwei Verbindungskanäle 42 vorgesehen, die sich in axialer Richtung von der zweiten Arbeitskammer 17 bis zur ersten Arbeitskammer 15 erstrecken und radial in die erste Arbeitskammer 15 einmünden. Dabei wird ein Verbindungskanal 42 jeweils durch axiale Seitenwände 43,49 und eine radiale Seitenwand 44 gebildet. Da Fig. 1 den Bremskraftverstärker 1 in einem Längsschnitt durch zwei Ebenen zeigt, ist der zweite Verbindungskanal 42 nicht sichtbar. Der Bremskraftverstärker 1 ist jedoch symmetrisch aufgebaut, so dass die zwei Be- und Entlüftungskanäle 35,26 sowie die zwei Verbindungskanäle 45 jeweils diametral gegenüberliegend auf dem Umfang des Steuergehäuses 9 verteilt angeordnet sind.

Das Reaktionselement 27 sowie der Kopfflansch 30 des Ausgangsgliedes 31 sind in einem, als zylindrische Hülse 29 ausgestalteten Aufnahmeelement angeordnet, welches dazu dient, Beschädigungen des Steuergehäuses 9 durch Querkräfte zu vermeiden, welche auf das Ausgangsglied wirkenden können. Wie aus Fig. 1 ersichtlich ist, ist die Hülse 29 in einer Ausnehmung 45 des Steuergehäuses 9 angeordnet, wodurch sie am Steuergehäuse 9 axial und radial abgestützt ist. Es wird ferner aus Fig. 1 deutlich, dass das Reaktionselement 27 in axialer Richtung einerseits an den Kopfflansch 30 sowie andererseits an das Steuergehäuse 9 und den Ventilkolben 22 angrenzt. In radialer Richtung grenzt das Reaktionselement 27 an die Hülse 29 an.

Durch die zylindrische Form ist die Hülse 29 zum einen einfach und kostengünstig herstellbar und zum anderen weist die Hülse 29 lediglich einen nicht bezifferten Innendurchmesser auf, der auf die Ausnehmung 45 des Steuergehäuses 9 abgestimmt werden muss. Dadurch wird die Spaltsituation zwischen Hülse 29 und Steuergehäuse 9 sowie zwischen Hülse 29 und Ausgangsglied 31 deutlich verbessert, d.h. die Spalte können im Vergleich zu bekannten Bremskraftverstärkern erheblich verkleinert werden. Dadurch ergeben sich Vorteile durch eine minimierte Spaltextrusion des Reaktionselementes 27 und durch eine Verkürzung des Leerweges des Bremskraftverstärkers 1. Ferner kann die Konzentrizität der Bauteil besser gewährleistet werden.

Eine weitere Verbesserung des Leerweges wird dadurch erreicht, dass das Reaktionselement 27 Kanten mit einem sehr geringen Radius, d.h. sozusagen nahezu scharfen Kanten aufweist, wodurch im Bereich des Reaktionselementes 27 keine Freiräume entstehen, in welche es bei Belastung hineingedrängt werden kann, ohne dass eine Reaktionskraft auf das Eingangsglied 18 bzw. den Ventilkolben 22 abgegeben wird.

Die Hülse 29 ist auf einer Innenseite 46 an ihren Enden gefast ausgebildet, wodurch die Montage der Hülse 29 in Steuergehäuse 9, aber auch die Montage des Reaktionselements 27 und des Ausgangsgliedes 31 in die Hülse 27 erleichtert ist.

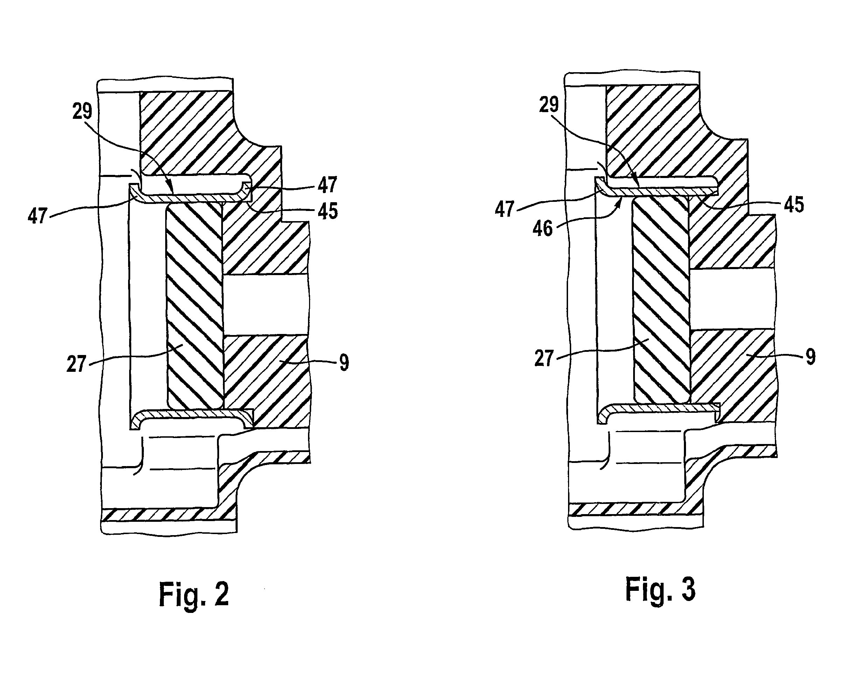

Fig. 2 und 3 zeigen jeweils einen Ausschnitt eines zweiten und eines dritten Ausführungsbeispieles eines erfindungsgemäßen Bremskraftverstärkers 1 im Längsschnitt, welche sich zum ersten Ausführungsbeispiel lediglich in der Ausgestaltung der Hülsen 29 unterscheiden.

Wie aus Fig. 2 hervorgeht, weist die Hülse 29 des zweiten Ausführungsbeispieles zur Montageerleichterung an ihren Enden einen nach radial außen ausgebildeten Kragen 47 auf. Dagegen zeigt Fig. 3 die Hülse 29 mit einem ersten, dem Steuergehäuse 9 abgewandten Ende, das einen nach radial außen ausgebildeten Kragen 47 aufweist, und mit einem zweiten, dem Steuergehäuse 9 zugewandtem Ende, welches auf der Innenseite 46 gefast ausgebildet ist.

Bei allen drei beschriebenen Ausführungsbeispielen ist die Hülse 29 in axialer Richtung derart in der Ausnehmung 45 positioniert, dass eine Anlage des Reaktionselementes 27 ohne für den Leerweg negativ wirkende Freiräume gewährleistet ist. Beispielsweise ist die Hülse 29 gemäß Fig. 2 derart in axialer Richtung positioniert, dass sich der abgerundete Bereich des Kragens 47 außerhalb des Bereiches des Reaktionselementes 27 befindet.

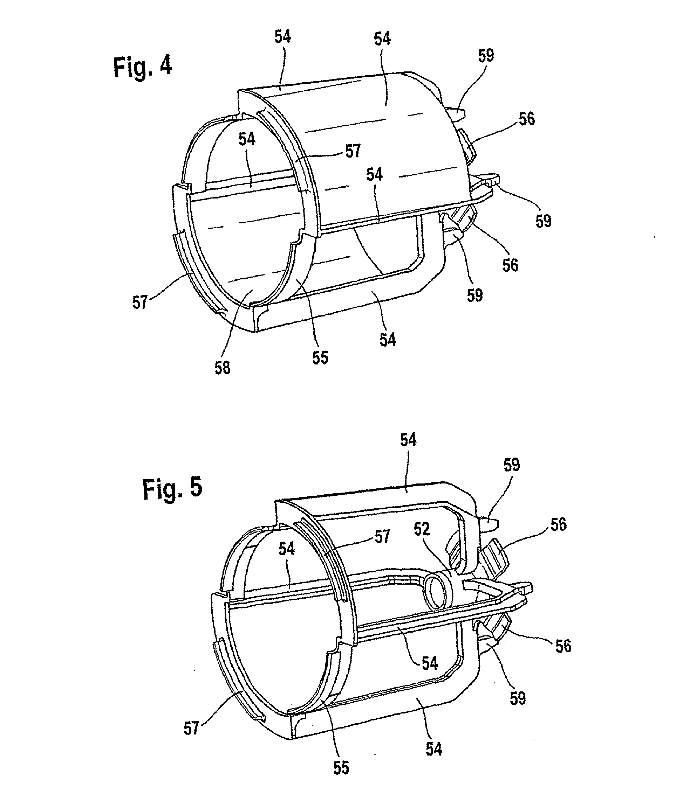

Aus Fig. 1 ist ersichtlich, dass die Hülse 29 mittels eines Haltelementes 48 in axialer Richtung gehalten wird, das in Fig. 4 bzw. Fig. 5 in perspektivischer Darstellung gezeigt ist. Die Halteelemente 48 gemäß den Fig. 4 und 5 unterscheiden sich lediglich darin, dass das in Fig. 1 und 4 gezeigte Haltelement 48 zusätzliche Versteifungselemente aufweist.

Das Haltelement 48 ist im Wesentlichen topfförmig ausgebildet und wird durch die Rückstellfeder 32 in Richtung Reaktionselement 27 vorgespannt, wobei das Ausgangsglied 31 einen Topfboden 50 des Haltelementes 48 mittig durchragt. Auf einer Innenseite 51 des Haltelementes 48 ist ein von dem Topfboden 50 hervorstehender, zylindrischer Fortsatz 52 zur Führung des Ausgangsgliedes 31 vorgesehen und die Rückstellfeder 32 liegt zumindest teilweise an einem Topfrand 53 an. Ein zusätzliches Element zur Verbindung des Haltelementes 48 mit dem Steuergehäuse 9 ist durch die Federvorspannung der Rückstellfeder 32 nicht notwendig, wodurch auch ein zusätzlicher Befestigungsaufwand vermieden werden kann.

Wie insbesondere Fig. 4 und Fig. 5 zu entnehmen ist, ist das Haltelement 48 im wesentlichen aus vier Stegen 54 ausgebildet, welche am Topfboden 50 zusammenlaufen und am Topfrand 53 mittels eines umlaufenden Randes 55 miteinander verbunden sind. Im Bereich des Topfbodens 50 weist das Haltelement 48 radiale Arme 56, mittels welchen die Hülse 29 in axialer Richtung gehalten wird. Dabei sind die Arme 56 jeweils zwischen zwei Stegen 54 angeordnet.

Die Positionierung der Rückstellfeder 32 erfolgt durch axiale Vorsprünge 57 des Topfrandes 53 in dem Bereich, in welchem die Rückstellfeder 32 an dem Topfrand 53 anliegt.

Zur Versteifung des Haltelementes 48 können jeweils zwischen zwei Stegen 54 axial ausgerichtete Versteifungswände 58 vorgesehen sein, wie aus den Fig. 1 und 4 ersichtlich ist.

Ferner sind an den Stegen 54 im Bereich des Topfbodens 50 axiale Vorsprünge 59 angeordnet, welche das Haltelement 48 in der Ausnehmung 45 des Steuergehäuses 9 sowie an der Hülse 29 positionieren.

Der erfindungsgemäße Bremskraftverstärker 1 ist als TandemAusführung dargestellt. Grundsätzlich ist die Erfindung jedoch für alle pneumatische Bremskraftverstärker in Tandem- und Single-Ausführung geeignet.

### Bezugszeichenliste

- 1: Bremskraftverstärker
- 2: Verstärkergehäuse
- 3: Gehäusehalbschale
- 4: Steuerventil
- 5: Trennwand
- 6: vorderer Verstärkerraum
- 7: hinterer Verstärkerraum
- 8: Ausnehmung
- 9: Steuergehäuse
- 10: Verlängerung
- 11: Dichtelement
- 12: erste bewegliche Wand
- 13: zweite bewegliche Wand
- 14: erste Unterdruckkammer
- 15: erste Arbeitskammer
- 16: zweite Unterdruckkammer
- 17: zweite Arbeitskammer
- 18: Eingangsglied
- 19: Abschnitt
- 20: erster Dichtsitz
- 21: zweiter Dichtsitz
- 22: Ventilkolben
- 23: Ventilkörper
- 24: Führungselement
- 25: Ventilfeder
- 26: Entlüftungskanal
- 27: Reaktionselement
- 28: Durchbruch
- 29: Hülse
- 30: Kopfflansch
- 31: Ausgangsglied
- 32: Rückstellfeder
- 33: Rückholfeder
- 34: Halteelement
- 35: Belüftungskanal
- 36: Querglied
- 37: Dichtfläche
- 38: Versteifungselement
- 39: Durchlass
- 40: Raum
- 41: Ringraum
- 42: Verbindungskanal
- 43: Seitenwand
- 44: Seitenwand
- 45: Ausnehmung
- 46: Innenseite
- 47: Kragen
- 48: Halteelement
- 49: Seitenwand
- 50: Topfboden
- 51: Innenseite
- 52: Fortsatz
- 53: Topfrand
- 54: Steg
- 55: Rand
- 56: Arm
- 57: Vorsprung
- 58: Versteifungswand
- 59: Vorsprung

## Patentansprüche

1. Pneumatischer Bremskraftverstärker (1)
mit einem Verstärkergehäuse (2), welches durch wenigstens eine, mit einem pneumatischen Differenzdruck beaufschlagbare, axial bewegliche Wand (12,13) in wenigstens zwei Kammern (14,15,16,17) unterteilt ist,
mit einem, den Differenzdruck steuerenden, in einem Steuergehäuse (9) angeordneten Steuerventil (4),
mit einem betätigbaren Eingangsglied (18), welches mit einem Ventilkolben (22) verbunden ist,
mit einem Ausgangsglied (31), welches einen Hauptzylinder mit einer Verstärkungskraft beaufschlagt,
sowie mit einem Aufnahmeelement (29), welches ein gummielastisches Reaktionselement (27) sowie das daran anliegende Ausgangsglied (31) in radialer Richtung aufnimmt, wobei das Aufnahmeelement (29) am Steuergehäuse (9) axial und radial abgestützt ist,
und wobei das Aufnahmeelement (29) als zylindrische Hülse ausgebildet ist, wobei das Reaktionselement (27) in axialer Richtung einerseits an den Kopfflansch (30) sowie andererseits an das Steuergehäuse (9) und den Ventilkolben (22) angrenzt,
**dadurch gekennzeichnet, dass** das Aufnahmeelement (29) mittels eines Halteelementes (48) in axialer Richtung gehalten wird, welches durch eine Rückstellfeder (32) des Bremskraftverstärkers (1) vorgespannt vorgesehen und im Wesentlichen topfförmig ausgebildet ist, wobei das Ausgangsglied (31) einen Topfboden (50) des Haltelementes (48) mittig durchragtund das Halteelement (48) auf einer Innenseite (51) einen von dem Topfboden (50) hervorstehenden, zylindrischen Fortsatz (52) zur Führung des Ausgangsgliedes (31) aufweist, und die Rückstellfeder (32) zumindest teilweise an einem Topfrand (53) anliegt.

2. Pneumatischer Bremskraftverstärker (1) nach Anspruch 1, **dadurch gekennzeichnet, dass** die Hülse (29) an ihren Enden Mittel zur Montageerleichterung aufweist.

3. Pneumatischer Bremskraftverstärker (1) nach Anspruch 2, **dadurch gekennzeichnet, dass** die Hülse (29) auf einer Innenseite (46) an ihren Enden gefast ausgebildet ist.

4. Pneumatischer Bremskraftverstärker (1) nach Anspruch 2, **dadurch gekennzeichnet, dass** die Hülse (29) an ihren Enden einen nach radial außen ausgebildeten Kragen (47) aufweist.

5. Pneumatischer Bremskraftverstärker (1) nach Anspruch 2, **dadurch gekennzeichnet, dass** die Hülse (29) an einem ersten, dem Steuergehäuse (9) abgewandten Ende einen nach radial außen ausgebildeten Kragen (47) aufweist und an einem zweiten, dem Steuergehäuse (9) zugewandten Ende auf einer Innenseite (46) gefast ausgebildet ist.

6. Pneumatischer Bremskraftverstärker (1) nach Anspruch 1, **dadurch gekennzeichnet, dass** das Halteelement (48) im Bereich des Topfbodens (50) radiale Arme (56) zum Halten der Hülse (29) in axialer Richtung aufweist.

7. Pneumatischer Bremskraftverstärker (1) nach Anspruch 6, **dadurch gekennzeichnet, dass** das Haltelement (48) im Wesentlichen topfförmig aus vier Stegen (54) ausgebildet ist, welche an dem Topfboden (50) zusammenlaufen und an dem Topfrand (53) mittels eines umlaufenden Randes (55) miteinander verbunden sind, wobei die radialen Arme (56) jeweils zwischen zwei Stegen (54) angeordnet vorgesehen sind.

8. Pneumatischer Bremskraftverstärker (1) nach Anspruch 7, **dadurch gekennzeichnet, dass** zwischen zwei Stegen (54) eine Versteifungswand (58) vorgesehen ist.

## Claims

1. Pneumatic brake force booster (1),
having a booster housing (2) which is divided into at least two chambers (14,15,16,17) by at least one axially movable wall (12,13) which can be acted on with a pneumatic differential pressure,
having a control valve (4) which controls the differential pressure and which is arranged in a control housing (9),
having an actuable input member (18) which is connected to a valve piston (22),
having an output member (31) which exerts a boosting force on a master cylinder,
and having a receiving element (29) which receives a rubber-elastic reaction element (27), and the output member (31) which bears against the latter, in the radial direction, with the receiving element (29) being axially and radially supported on the control housing (9),
and with the receiving element (29) being designed as a cylindrical sleeve, with the reaction element (27) adjoining the head flange (30) at one side, and the control housing (9) and the valve piston (22) at the other side, in the axial direction,
**characterized in that** the receiving element (29) is held in the axial direction by means of a holding element (48) which is preloaded by means of a restoring spring (32) of the brake force booster (1) and is of substantially pot-shaped design, with the output member (31) projecting centrally through a pot base (50) of the holding element (48) and with the holding element (48), on an inner side (51), having a cylindrical projection (52) which projects from the pot base (50) and serves for guiding the output member (31), and with the restoring spring (32) bearing at least partially against a pot edge (53).

2. Pneumatic brake force booster (1) according to Claim 1, **characterized in that** the sleeve (29), at its ends, has means for facilitating assembly.

3. Pneumatic brake force booster (1) according to Claim 2, **characterized in that** the sleeve (29) is of bevelled design on an inner side (46) at its ends.

4. Pneumatic brake force booster (1) according to Claim 2, **characterized in that** the sleeve (29), at its ends, has a radially outwardly formed collar (47).

5. Pneumatic brake force booster (1) according to Claim 2, **characterized in that** the sleeve (29), at a first end facing away from the control housing (9), has a radially outwardly formed collar (47), and at a second end facing towards the control housing (9), is of bevelled design on an inner side (46).

6. Pneumatic brake force booster (1) according to Claim 1, **characterized in that** the holding element (48), in the region of the pot base (50), has radial arms (56) for holding the sleeve (29) in the axial direction.

7. Pneumatic brake force booster (1) according to Claim 6, **characterized in that** the holding element (48) is formed, substantially in the shape of a pot, from four webs (54) which converge at the pot base (50) and which are connected to one another at the pot edge (53) by means of an encircling edge (55), with the radial arms (56) being arranged in each case between two webs (54).

8. Pneumatic brake force booster (1) according to Claim 7, **characterized in that** a stiffening wall (58) is provided between two webs (54).

## Revendications

1. Servofrein pneumatique (1) comprenant un boîtier d'amplificateur (2) qui est divisé, par au moins une paroi axialement déplaçable (12, 13) pouvant être sollicitée par rapport à une pression différentielle pneumatique, en au moins deux chambres (14, 15, 16, 17),
une soupape de commande (4) commandant la pression différentielle, disposée dans un boîtier de commande (9),
un organe d'entrée actionnable (18), qui est connecté à un piston de soupape (22),
un organe de sortie (31), qui sollicite un cylindre principal avec une force d'amplification, et un élément de réception (29), qui reçoit un élément de réaction en plastique élastomère (27), et qui reçoit également l'organe de sortie (31) s'appliquant contre lui dans la direction radiale, l'élément de réception (29) étant supporté axialement et radialement sur le boîtier de commande (9),
et l'élément de réception (29) étant réalisé sous forme de douille cylindrique, l'élément de réaction (27) étant adjacent dans la direction axiale d'une part à la bride de tête (30) et d'autre part au boîtier de commande (9) et au piston de soupape (22),
**caractérisé en ce que** l'élément de réception (29) est maintenu dans la direction axiale au moyen d'un élément de retenue (48), qui est précontraint par un ressort de rappel (32) du servofrein (1), et qui est réalisé essentiellement en forme de pot, l'organe de sortie (31) traversant le centre d'un fond de pot (50) de l'élément de retenue (48) et l'élément de retenue (48) présentant, sur un côté intérieur (51), une saillie cylindrique (52) saillant depuis le fond du pot (50) pour guider l'organe de sortie (31), et le ressort de rappel (32) s'appliquant au moins en partie sur un bord du pot (53).

2. Servofrein pneumatique (1) selon la revendication 1, **caractérisé en ce que** la douille (29) présente à ses extrémités des moyens facilitant le montage.

3. Servofrein pneumatique (1) selon la revendication 2, **caractérisé en ce que** la douille (29) est réalisée sur un côté intérieur (46) de manière biseautée à ses extrémités.

4. Servofrein pneumatique (1) selon la revendication 2, **caractérisé en ce que** la douille (29) présente à ses extrémités un collet (47) réalisé radialement vers l'extérieur.

5. Servofrein pneumatique (1) selon la revendication 2, **caractérisé en ce que** la douille (29) présente, à une première extrémité opposée au boîtier de commande (9), un collet (47) réalisé radialement vers l'extérieur, et **en ce qu'**elle est réalisée de manière biseautée sur un côté intérieur (46) à une deuxième extrémité tournée vers le boîtier de commande (9).

6. Servofrein pneumatique (1) selon la revendication 1, **caractérisé en ce que** l'élément de retenue (48) présente, dans la région du fond du pot (50), des bras radiaux (56) pour retenir la douille (29) dans la direction axiale.

7. Servofrein pneumatique (1) selon la revendication 6, **caractérisé en ce que** l'élément de retenue (48) est réalisé essentiellement en forme de pot constitué de quatre nervures (54), qui se réunissent au fond du pot (50) et qui sont connectées les unes aux autres au niveau du bord du pot (53) au moyen d'un bord périphérique (55), les bras radiaux (56) étant disposés à chaque fois entre deux nervures (54).

8. Servofrein pneumatique (1) selon la revendication 7, **caractérisé en ce que** l'on prévoit une paroi de renforcement (58) entre deux nervures (54).
